# EUROPEAN PATENT APPLICATION

(11) **EP 0 883 283 A2**
(43) Date of publication of application: **09.12.1998**
(21) Application number: 98303405.9
(22) Date of filing: 30.04.1998
(51) Int. Cl.: H04N 1/23

(54) **Liquid ink printer with automatic ink switching for facsimile reception**

(30) Priority: 02.06.1997 US 866994
(71) Applicant: Xerox Corporation, Rochester, New York 14644 (US)
(72) Inventor: Trenchard, Thomas J., Farmington, NY 14425 (US); Premnath, Karai P., Rochester, NY 14617 (US)
(74) Representative: Walker, Antony James Alexander

(57) **Abstract**

A color liquid ink printer including a facsimile function (12) including an ink selection circuit (118) for switching from a first ink (94), such as black, to a second ink (96, 98, 100), such as magenta, for printing facsimiles when the black ink becomes insufficient for printing. The multifunction device includes multiple ink supplies of different colors useful for printing images in full color but which typically prints facsimiles in black only. Upon sufficient depletion of the black ink, the device switches to printing facsimiles in another color such as magenta or process black (cyan, magenta, and yellow) such that facsimiles can be received and printed.

## Description

This invention relates generally to a multifunction liquid ink device including a facsimile function and more particularly to a color ink jet printer including a facsimile function with automatic switching from a first ink to a second ink when the quantity of the first ink is insufficient to continue the printing of received facsimiles.

In the case of a color liquid ink printer, cyan, magenta, yellow, and black (C, M, Y, and K) ink are used to create full color images. Each of the ink cartridges contains a different color ink with the inks being deposited in response to image information received thereby to print an image with the black ink and one other color, known as highlight color, or with all the inks to create a full color image. Typically, when the quantity of ink within a cartridge becomes insufficient to continue printing the cartridge is replaced with a new filled ink cartridge by a user.

Printers typically print image information received from an image output device such as a personal computer. In addition, if the printer includes a facsimile function, the combination also being known as a multifunction device, print information is received over a telephone line from another facsimile machine or a personal computer having a facsimile transmission function. Upon receipt of the facsimile transmission, the printer prints the received information. Such reception is typically completed without intervention by the user and is often done during non-business hours when the user is not present. In fact, such transmissions are common between different time zones.

In US-A-5,532,849 to McIntyre et al., a facsimile with local correction of TRC based on destination TRC requirements is described. An image processing circuit includes a circuit for applying a TRC correction to gray values derived at a scanner before a halftoning circuit quantizes the gray values for printing.

In accordance with one aspect of the present invention, there is provided a liquid ink printer, including a facsimile function, in which liquid ink is deposited on a recording medium during a printing operation in response to a received facsimile transmission. The printer includes a first ink supply, including a first ink, a second ink supply, including a second ink, a liquid ink printhead, coupled to the first ink supply and to the second ink supply, depositing liquid ink on the recording medium, in response to the received facsimile transmission, and an ink selection circuit, transmitting an ink selection signal, causing the liquid ink printhead to deposit the second ink after the first ink supply includes an insufficient quantity of the first ink to continue the printing operation.

Pursuant to another aspect of the invention, there is provided a method of printing with a liquid ink printer, including a first ink and a second ink and having a facsimile function, for receiving a plurality of facsimile transmissions. The method includes the steps of printing a first of the plurality of facsimile transmissions with the first ink, and printing a second of the plurality of facsimile transmissions with the second ink after the first ink includes an insufficient quantity to continue printing.

An embodiment of the present invention will now be described, by way of example, with reference to the accompanying drawings, in which:

FIG. 1 is a block diagram depicting a multi-functional document processing system.

FIG. 2 is a schematic view of a multi-functional document processing device contemplated to incorporate the present invention.

FIG. 3 is a schematic diagram of the control circuitry of the present invention including an ink jet printhead with associated ink cartridges

FIG. 4 is a flow diagram illustrating switching from a first ink cartridge to a second ink cartridge to enable continued printing of received facsimiles after the first ink cartridge includes insufficient ink for continued printing.

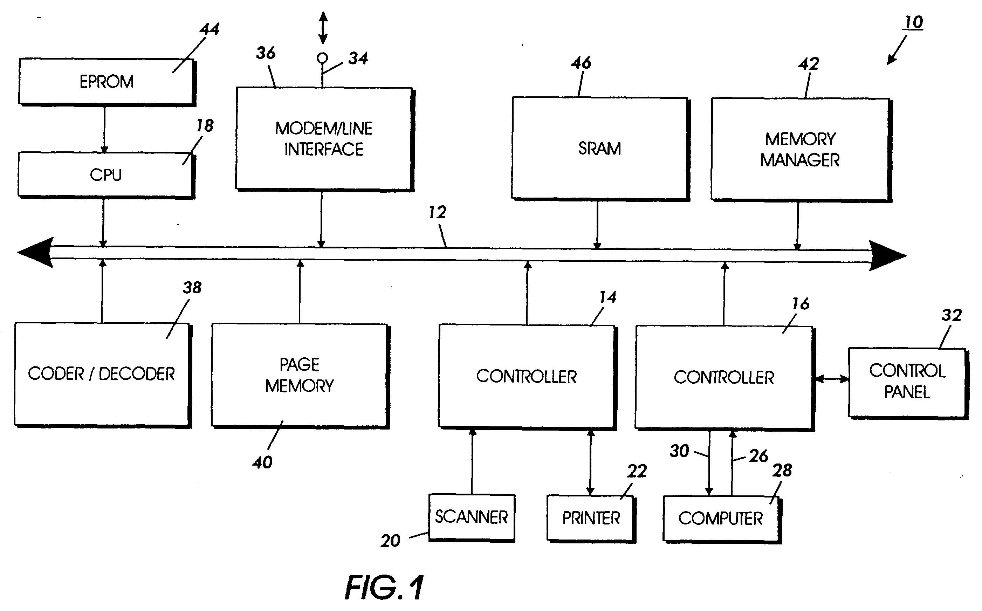

FIG. 1 illustrates a multi-functional document processing system which is referenced generally as numeral 10. A system bus 12 provides for communication between the various components thereof. System control is distributed between two programmable controllers, hereinafter a first controller 14 and a second controller 16. A central processing unit (CPU) 18 includes a third programmable controller providing control of the overall system processing. A scanner 20 and a printer 22 are connected to the system via the first controller 14. The scanner 20 is included to provide full facsimile and/or copier functions and can include either a color scanner or a monochrome scanner. The printer 22 is a color printer printing in cyan, magenta, yellow, and black inks and provides the hard-copy output as required. The system is operative to process electronic document signals directed thereto by the second controller 16 by serial, parallel, or SCSI connection 26 from an external personal computer 28 or workstation. The second processor 16 may also support an additional outward connection 30 from the system to the personal computer 28 for passing scanned data thereto. Second controller 16 additionally provides control for a user interface/control panel (UI) 30 for the system. The second controller 16 also receives the outputs of the systems machine sensors and provides control of the mechanical components of the system and particularly the paper transport systems. It will no doubt be appreciated that instead of a personal computer, a network connection or network server could be substituted to provide network operations or that the required functionality could be included in the multi-function device.

Facsimile communication is provided for the system 10 via a telephone line 34 and a fax modem 36. Decoding and encoding of facsimile transmissions is provided by a coder/decoder 38. A page memory 40 may be provided, including storage capability for storing electronic document signals corresponding to at least several pages of information. Conveniently, it may be direct random access memory (DRAM) type memory. Access to the memory is controlled by a memory manager 42 which is in turn controlled by the CPU 18. Programming information is stored in the erasable programmable read only memory (EPROM) 44 and a static random access memory (SRAM) 46.

In one possible embodiment of the present invention, CPU 18 controls access to the data bus 12 on which image information and control information flow. In such an arrangement, a facsimile transmission can be received by the document processing system 10 at the telephone line 34 and the fax modem 36 and directed either directly to the printer 22 by the first controller 14 or to the page memory 40. Information stored at the page memory 40 can be directed to the printer 22 or to the computer 28. In addition, information from the computer 28 can be directed by the connection 26 to the second controller 16 to either the page memory 40 or to the printer 22. Scan data from the scanner 20 can be directed by the first controller 14 to the page memory 40 or to the printer 22. Image output can occur at the printer, or at a display of the computer 28.

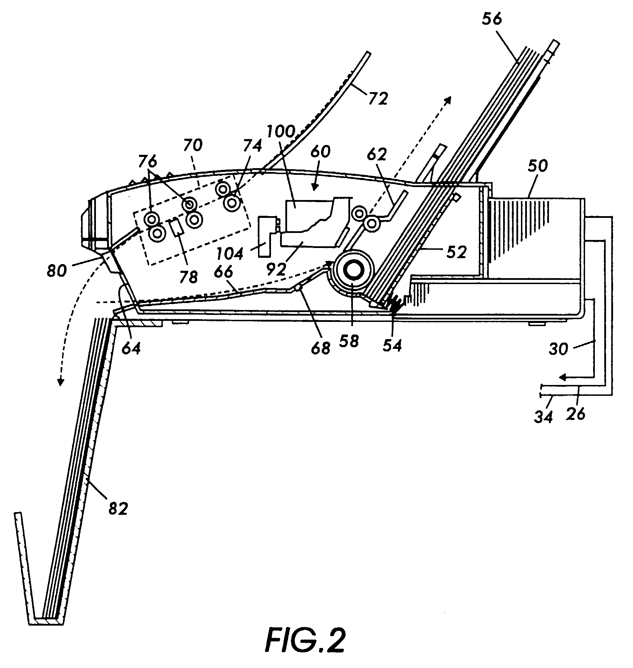

FIG. 2 illustrates a highly simplified and schematic view of a multi-function device or machine capable of incorporating the described invention. Within a housing 50, the various circuits described with reference to FIG. 1 are supported and include a scanner, printer, paper transports, and appropriate connections to the external functions. An input tray 52, with an appropriate tray elevator 54 supports a plurality of individual sheets of recording media 56 such as paper. During printing, individual sheets of the recording media 56 are fed from the tray 52 by a feed rolling arrangement 58 which advances sheets from the input tray. As the recording media 56 is driven past the feed roller 58, causing a reverse bow, an ink jet printing system 60 deposits ink in image configuration a single swath at a time. Further details with respect to thermal ink jet printing devices are available at US-A-4,638,337 to Torpey et al., and US-A-5,422,664 to J. Stephany illustrating a multi-color ink jet printer. Upon completion of printing, the documents continue to advance until deposit in an output tray 62.

For printing on media which is not suitable for stacking in the input tray 52, a bypass path is provided which is located at bypass entry 64. A sheet path 66 is defined by paper guides (not shown). In this embodiment, media is manually inserted until it is engaged at the feed roller 58. A sensor 68 senses the presence of the bypass media and signals the controller 16 (FIG. 1) to start operation of the feed roller for advancing the media past the printer 60. Within the dotted line 70, the mechanical components of the scanner 22 are illustrated. An input document tray 72 with retard feeder 74 feeds documents one after another from the tray 72. Documents are advanced to CVT arrangement 76 where the documents pass a full width scanning element 78 with appropriate illumination and optics as is known by those skilled in the art. The scanned documents are directed to an exit 80 from which they are gravity stacked in an output document tray 82.

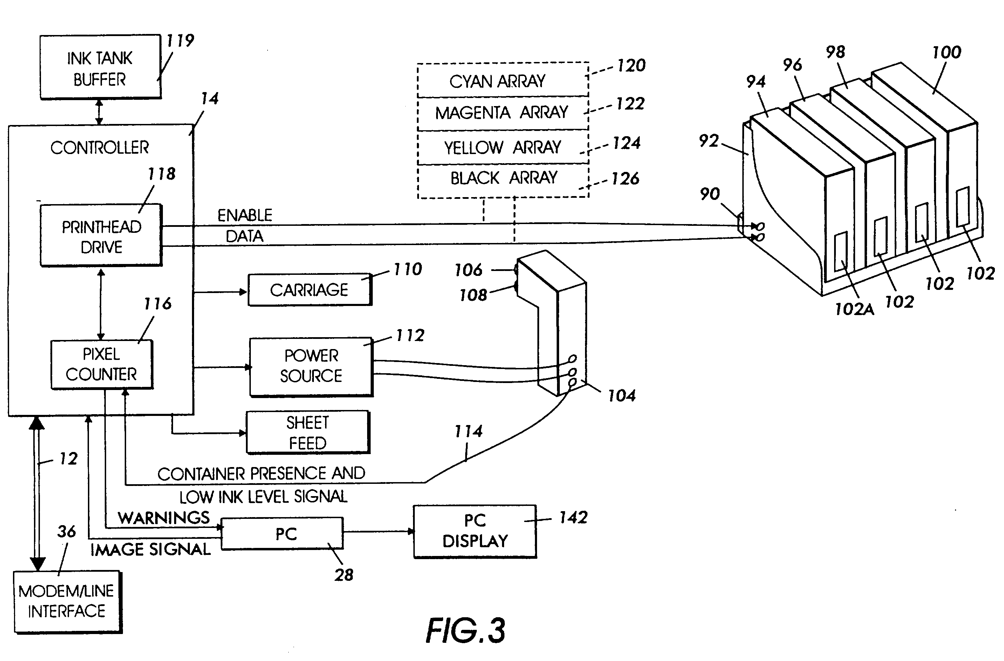

FIG. 3 is a schematic diagram of the control circuitry of the present invention including an ink jet printhead 90 supported by a housing 92 which includes a plurality of ink supplies, for instance tanks or cartridges, including a black ink tank 94, a cyan ink tank 96, a magenta ink tank 98, and a yellow ink tank 100, each containing the inks of black, magenta, cyan, and yellow respectively. The housing 92 is supported by a carriage moving along carriage rails (not shown) such that the housing including the printhead 90 scans back and forth across a sheet of the recording media 56 to deposit a swath of information as is understood by those skilled in the art. Each of the ink tanks include a reflective element 102 which is used to detect the ink level within each of the individual ink tanks. An optical sensor 104, also shown in FIG. 2, includes a light source 106 and a sensor 108. The optical assembly 104 is used to detect the presence of the ink cartridges as well as the level of ink contained therein. The light source 106 directs light into the reflective elements 102 and the sensor 108 detects the amount of light transferred through the reflective elements such that the level of ink contained in the individual cartridges can be determined. Additional details of this sensing system and detecting system can be found in United States patent application serial number 572,595, filed December 14, 1995, having the title "Sensing System for Detecting Presence of an Ink Container and Level of Ink Therein". Other ink level sensing mechanisms are also possible.

The present invention is directed to a color multifunction device including a facsimile function which enables printing facsimile jobs without user intervention even after the quantity of black ink becomes insufficient for printing. Typically, all incoming facsimiles are printed with a black ink. Since facsimiles might be received over night, for instance, or at other times when the user is not present, it is possible that the black ink may be depleted from the ink cartridge 94 such that further printing of received facsimiles can not be accomplished. Because the present invention, however, includes the additional ink tanks of a color printer (cyan, magenta, and yellow), the present invention automatically prints all incoming facsimiles with another ink, or combination of inks, after the black ink has been sufficiently depleted. The present invention automatically detects that the black ink has reached a level such that the amount of ink remaining in the ink cartridge is deemed insufficient to continue printing of any additional received facsimile transmissions. By switching from one ink cartridge or tank to another or to a combination thereof, facsimile transmissions can be continually received thereby minimizing any user dissatisfaction.

In operation, the controller 14 typically controls a carriage 110, coupled to the housing 92, which moves the housing 92 to a location adjacent to the optical sensor 104 for sensing of the ink levels within each of the ink tanks. A power source 112 provides the necessary power to drive the light source 106 and the sensor 108 such that upon detection of low ink levels within any one of the ink cartridges, a signal indicating the presence of the containers as well as any low ink level signal is transmitted to the controller 14 over a conductor 114.

In an exemplary embodiment, upon the completion of a facsimile transmission, the housing 92 is moved to the optical sensor location such that the reflecting element 102A, for black ink, is examined for a low ink level. If the ink level is indicated as being low, it has been found that additional ink still remains within the container and this amount of ink can be used to print approximately 25 to 30 pages of additional facsimile transmissions Consequently, to ensure that the amount of ink in the ink container is not reduced to an unacceptably low level, possibly resulting in depriming of the ink channels and/or nozzles, a pixel counter 116 counts the pixels, that is, the number of drops being ejected by the printhead 90 in response to the received facsimile transmission. After a sufficient number of pixels have been printed, the amount of ink remaining in the ink cartridge 94 is deemed insufficient to continue printing of additional facsimile transmissions. At this time the pixel counter 116 generates a signal which is examined by a printhead drive 118 indicating that the black ink is insufficient to continue printing and that a different color of ink or a combination of inks needs to be selected in response to any additional facsimile transmissions. The printhead drive 118 generates an enable signal directing which of the colors is deposited on the recording medium as well as a data signal for the facsimile transmitted data. An ink tank buffer 119 can be used to maintain a stored electronic signal indicating which of the ink tanks are currently being used for printing facsimiles.

In the present embodiment, the printhead 90 includes a single linear array of ink ejecting nozzles. The linear array is segmented such that the array is divided or segmented into four segments, each segment or portion of the linear array including a cyan array 120, a magenta array 122, a yellow array 124, and a black array 126. As has been described, the black array typically ejects ink received from the black cartridge 94 during transmission of facsimiles. Once it has been determined, however, that the ink contained within the cartridge 94 is insufficient to continue printing, the enable signal generated by the printhead drive, enables either a combination of the cyan array, magenta array, and yellow array to deposit process black using the cyan, magenta, and yellow inks or selectively enables the cyan array 120 to deposit cyan ink only and to then deposit magenta ink only if the cyan ink should be sufficiently depleted. Cyan ink is selected first after black since the density of cyan ink is greater than that of magenta. It is not intended to use yellow ink only for a facsimile function because yellow ink includes a low ink density which can be insufficient for legible readability of the received facsimile transmissions. Different orders of the inks as well as combinations of two or more inks are within the scope of the invention.

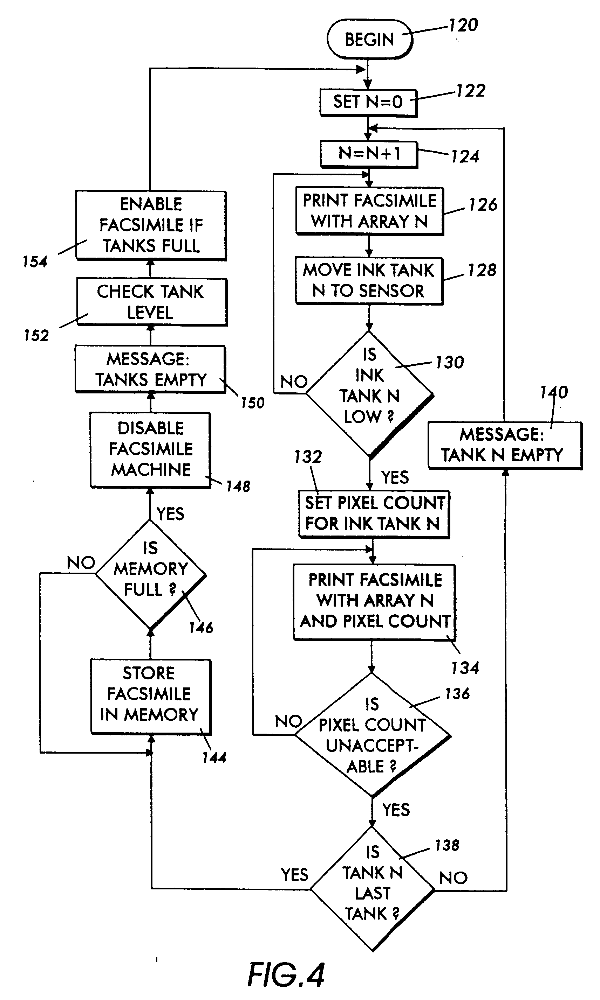

Referring now to FIG. 4, a flow diagram illustrating the switching from a first ink cartridge to a second ink cartridge to enable continued printing of received facsimiles after the first ink cartridge includes an insufficient amount of ink for continued printing is described. The process begins at step 120 which might occur at power-up of the device. At step 122, a variable N is set to zero. The variable N will be used to determine which of the ink cartridges and/or arrays are selected for printing. At step 124, N is set to N + 1 such that N is initially set to 1. At step 126, the facsimile is printed with array N or array number 1 in the first instance. Such calculations can be completed by the controller 14 as is understood by those skilled in the art and the value of N can be stored in the buffer 119.

Each of the individual ink cartridges can be assigned a numeral such that N = 1 is the black cartridge, N = 2 is the cyan cartridge, and N = 3 is the magenta cartridge. It is also possible, that the number 2 might be an indicate a combination of the cyan, magenta, and yellow cartridges for printing process black.

As described, the individual array N corresponds to a segment of the printhead array 90. The present invention, however, is equally applicable to a two array printhead or a plurality of arrays printhead wherein a single array might be used for printing black only and a second array would print cyan, magenta, and yellow. Likewise it is possible that each of the individual colors could be associated with an individual array.

Once the facsimile job has been printed with array N, the ink tank N is moved to the optical sensor at step 128. At this time the ink tank N is examined to determine if the ink tank is low as described at step 130. If it is not low, based on the sensor output, then the next facsimile is printed with the array N at step 126 as before. If, however, the ink tank N is low, then the pixel counter is set to a particular count for the ink tank N at step 132. This number might be a maximum number of pixels which is decremented each time an ink drop is ejected such that once the pixel count reaches zero, or falls within a preselected range of values, the printhead drive 118 determines that it is time to switch from one ink cartridge to another. When the pixel count ranges between the maximum number and the final acceptable value, the next facsimile is printed with the array N and the pixel count continues at step 134. When it is determined that the pixel count is unacceptable at step 136, then at step 138, the controller 14 determines whether or not tank N is the last ink tank which could be used for printing. If it is not the last tank, then a message signal is generated as a warning that tank N is empty and is sent to the PC 28 for display on the PC display 142 of FIG. 3.

After the message is displayed, the process returns to generate a new value of N such that N is now equal to 2. In the present description, therefore, the second ink tank, or cyan, is selected by the controller 14 and the cyan array is enabled. Facsimile data is sent thereto and the process continues until it is determined at step 138 that the tank N is the last tank at which point any remaining facsimiles are stored in the page memory 40 of FIG. 1. This continues until it is determined at step 146 that the memory is full. At this point the facsimile machine is disabled, at step 148, such that no additional facsimiles can be received. A new message is then generated indicating that all of the ink tanks are empty at step 150. It is now up to the user to examine the messages displayed on the PC display 142. The user must change the ink tanks accordingly after which the printer checks each of the individual ink tank levels upon power-up at step 152. If is determined that each of the tanks are full, then the facsimile function is again enabled at step 154, whereafter the value of N is reset to zero such that facsimile printing can again be made with the black ink tank.

In recapitulation, there has been described a color ink jet printer including a facsimile function which switches from a first ink supply to a second ink supply when the first ink supply becomes insufficient to continue reliable printing. The present invention is not limited to ink jet printers having facsimile functions, however, but is equally applicable to any such device depositing drops of liquid ink on a recording medium in response to received facsimile transmissions. In addition, the present invention while directed to changing from one ink to another between facsimile transmissions can also be used to change from one ink to another during the facsimile transmission itself is necessary. Accordingly, it is intended to embrace all such alternatives, modifications and variations that fall within the spirit and broad scope of the appended claims.

## Claims

1. A liquid ink printer, including a facsimile function, in which liquid ink is deposited on a recording medium during a printing operation in response to a received facsimile transmission (12), comprising:
a first ink supply (94), including a first ink;
a second ink supply (96, 98, 100), including a second ink;
a liquid ink printhead (90), coupled to said first ink supply (94) and to said second ink supply (96, 98, 100), depositing liquid ink on the recording medium, in response to the received facsimile transmission (12); and
an ink selection circuit (118), transmitting an ink selection signal, causing said liquid ink printhead (90) to deposit said second ink after said first ink supply includes an insufficient quantity of said first ink to continue the printing operation.

2. The liquid ink printer of claim 1, comprising an ink level circuit (104, 114, 116), coupled to said selection circuit (118), transmitting an ink level signal to said selection circuit (118) in response to determining said insufficient quantity of said first ink to continue the printing operation.

3. The liquid ink printer of claim 2, wherein said ink level circuit (104, 114, 116) includes an optical sensor (104), transmitting the ink level signal in response to optically sensing said insufficient quantity of ink.

4. The liquid ink printer of claims 2 or 3, wherein the received facsimile transmission includes a plurality of pixel signals.

5. The liquid ink printer of claim 4, wherein said ink level circuit (104, 114, 116) includes a pixel counting circuit (116), transmitting the ink level signal in response to counting the pixel signals of the received facsimile transmission (12).

6. The liquid ink printer of any preceding claim comprising a third ink supply (96, 98, 100), including a third ink.

7. The liquid ink printer of claim 6, comprising an ink status memory (119), storing an ink status signal being accessible by said selection circuit (118), for providing an electronic status of the quantity of ink in one of said first, second, or third ink supplies (94, 96, 98, 100).

8. The liquid ink printer of claims 6 or 7, wherein the selection circuit (118) generates a signal causing said liquid ink printhead (90) to deposit a combination of said second ink (96, 98, 100) and said third ink (96, 98, 100) after said first ink supply (94) includes an insufficient quantity of said first ink to continue the printing operation.

9. A method of printing with a liquid ink printer, including a first ink and a second ink and having a facsimile function, for receiving a plurality of facsimile transmissions, comprising;
printing a first of the plurality of facsimile transmissions with the first ink; and
printing a second of the plurality of facsimile transmissions with the second ink after the first ink includes an insufficient quantity to continue printing.

10. The method of printing of claim 9, wherein said first printing step comprises printing the first of the plurality of facsimile transmissions with the first ink being black ink.
